# EUROPÄISCHE PATENTSCHRIFT

(11) **EP 1 358 786 B1**
(45) Veröffentlichungstag und Bekanntmachung des Hinweises auf die Patenterteilung: **02.02.2005**
(21) Anmeldenummer: 03009484.1
(22) Anmeldetag: 26.04.2003
(51) Int. Cl.: A01D 34/73

(54) **Messerträger für einen rotierenden Schneidkopf einer Pflanzenschneidvorrichtung**
Blade support member for a rotatory cutting head of a plant cutting apparatus
Support de lame pour une tête de coupe rotative d'un appareil de coupe de plantes

(30) Priorität: 29.04.2002 DE 10219180
(43) Veröffentlichungstag der Anmeldung: 05.11.2003
(73) Patentinhaber: MOGATEC Moderne Gartentechnik GmbH, 09435 Venusberg, OT Griessbach (DE)
(72) Erfinder: Franz, Reinhard, 09427 Ehrenfriedersdorf (DE); Vierig, Matthias, 09427 Ehrenfriedersdorf (DE)
(74) Vertreter: Neumann, Steffen

(56) Entgegenhaltungen:
- DE-A- 2 245 183
- DE-A- 2 556 553
- GB-A- 2 299 923

## Beschreibung

Die Erfindung betrifft einen Messerträger für einen rotierenden Schneidkopf einer Pflanzenschneidvorrichtung, an dem mindestens zwei auf einem Achsbolzen schwenkbar gelagerte und in der Betriebsstellung den Messerträger radial überragende Schneidmesser aus Kunststoff angeordnet sind, wobei der Achsbolzen einen Kopf und einen Schaft beinhaltet sowie der Schaft eine Ausnehmung im Messerträgers durchgreifend ausgestaltet ist.

Derartige Messerträger kommen im Rahmen von handgeführten Pflanzenschneidvorrichtungen zum Einsatz, die auch als Freischneider, Fadenschneider, Rasentrimmer oder Kantenschneider bezeichnet werden und bei der Landschafts- und Gartenpflege zunehmend Verwendung finden, um insbesondere Pflanzen (= Schnittgut) an Standorten schneiden zu können, die mit herkömmlichen Geräten (z.B. Rasenmähern) schlecht zugänglich sind oder deren Anwendung sich aufgrund der Flächengröße nicht lohnt. In Abhängigkeit der für die zu lösende Schneidaufgabe notwendigen Schneidkraft sind diese Vorrichtungen bei eher eine geringe Schneidkraft erfordernden Schnittgut (z.B.: Gräser und Halme) mit flexiblen Schneidfäden aus Kunststoff und/oder bei Schnittgut (z.B. Disteln oder Nesselgewächse), welches notwendigerweise höherer Schneidkräfte bedarf, mit massiven Schneidmessern aus Kunststoff ausgestattet.

Ein solcher gattungsgemäßer Messerträger für den Schneidkopf eines Freischneiders ist aus der DE 25 56 553 C2 bekannt. Bei diesem werden die Schneidmesser jeweils von einem, in einer Bohrung aufgenommenen Achsbolzen gehalten, der aus einer lösbaren Verbindung in Form einer Schraube mit eingespritzter oder eingepresster Mutter besteht. Zur Anpassung an unterschiedliche Schnittbedingungen ist der Schneidkopf sowohl mit Schneidmessern aus Kunststoff als auch unsteifen Schneidwerkzeugen (flexiblen Schneidfäden) ausgestattet.

Nachteilig wirkt sich bei dieser Lösung aus, dass der infolge Verschleiß oder Messerbruch unvermeidliche und sich durch Lösen bzw. die erneute Befestigung des Verbindungselements vollziehende Austausch der Schneidmesser nur unter Verwendung von Werkzeugen und somit entsprechend zeitaufwendig vollzogen werden kann. Dabei ist es außerdem nicht auszuschließen, dass die losen Befestigungselemente verloren gehen. Äußerst schwerwiegend ist die Gefahr, dass der regelmäßig auch von Laien durchzuführende Austausch der Schneidmesser dazu führen kann, dass die das jeweilige neue Schneidmesser am Messerträger lagefixierende Schraubverbindung nicht ordnungsgemäß gefügt wird. Dies hat für die nachfolgende Wiederinbetriebnahme der Pflanzenschneidvorrichtung Folgen derart, dass sich das Messer und dessen Verbindungselemente vom Messerträger lösen können und damit durch die großen Zentrifugalkräfte ein extremes Gefährdungs- und Verletzungspotential, insbesondere für die Bedienperson bzw. deren Umfeld, darstellen.

Gegenstand der Erfindung ist ein Messerträger, bei dem der Austausch der Schneidmesser schnell und ohne Werkzeug vollzogen, ein Verlust der Verbindungselemente unterbunden sowie das unbeabsichtigtes Lösen des Schneidmessers vom Messerträger insbesondere auch dann wirksam ausgeschlossen werden kann, wenn dieser Schneidmesserwechsel durch Laien erfolgt.

Diese Aufgabe wird bei einer gattungsgemäßen Vorrichtung durch die kennzeichnenden Merkmale des Patentanspruchs 1 gelöst.

Die Vorteile der Erfindung bestehen darin, dass ein Messerträger zur Verfügung gestellt wird, bei dem ein unbeabsichtigtes Lösen des Schneidmessers vom mit dem Schneidkopf rotierenden Messerträger und den sich durch die Zentrifugalkräfte radial über den Messerträger hinauserstreckenden Stellung befindlichen Schneidmessern (= Betriebs- oder Schneidstellung) durch eine selbsttätige Verriegelung ausgeschlossen werden kann.
Dadurch sind im Rahmen des Schneidmesserwechsels auftretende Montagefehler, insbesondere von Laien, aber auch von Fachleuten, vollständig verhinderbar, so dass kein Gefährdungs- und Verletzungspotential mehr in Betracht gezogen werden muss.
Dabei ist weiterhin jedes der Schneidmesser nur in einer einzigen und von der Betriebsstellung fernab sowie entgegen der Drehrichtung des Messerträgers liegenden eingeschwenkten Lage vom Achsbolzen lös- und abnehmbar. Außerdem wird ein schneller und keine Werkzeuge erfordernder Austausch der Schneidmesser gewährleistet sowie ein Verlust der Verbindungselemente durch deren unlösbare Verbindung mit dem Messerträger abgesichert.

Vorteilhafte Weiterbildungen der Erfindung sind aus Patentansprüchen 2 bis 6 ersichtlich.

Durch die Merkmale der Patentansprüche 2 und 3 wird eine einfache geometrische Ausgestaltung und die Sicherung eines geringen Spiels zwischen den betroffenen und u.a. für die selbsttätige Verriegelung der Schneidmesser maßgebend verantwortlichen Bauteilen erzielt.

Die Ausgestaltungen nach den Patentansprüchen 4 und 5 bewirken, dass relativ geringe Kräfte für die Realisierung der unlösbaren Befestigung des Achsbolzens am Messerträger erforderlich sind.

Letztlich wird durch die Merkmale des Patentanspruchs 6 abgesichert, dass die Schneidmesser ihre beiden, um 180° versetzten Endlagen am Messerträger einnehmen können.

Die Erfindung soll nachfolgend an einem Ausführungsbeispiel und zugehörigen Zeichnungen näher erläutert werden. Es zeigen:
- Fig. 1: eine perspektivische Ansicht des erfindungsgemäßen Messerträgers, wobei sich das linke Schneidmesser in demontierter Stellung und das rechte Schneidmesser bei rotierendem Schneidkopf in einer sich radial über den Messerträger hinausragenden Betriebsstellung (Schneidstellung) befindet
- Fig. 2: eine Seitenansicht des Achsbolzens
- Fig. 3: eine vergrößerte Draufsicht des Schneidmessers
- Fig. 4: eine vereinfachte und vergrößerte Schnittdarstellung der erfindungsgemäßen Schneidmesserbefestigung

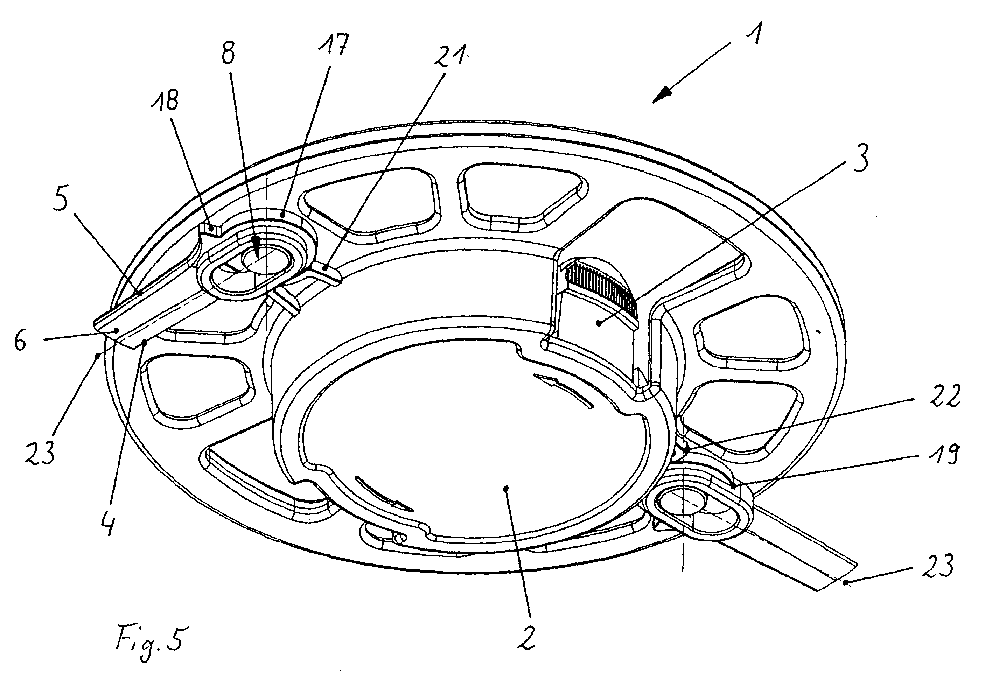

- Fig. 5: eine perspektivische Ansicht des erfindungsgemäßen Messerträgers, wobei sich das linke Schneidmesser in einer eingeschwenkten Stellung befindet, in der es nach einer in Richtung des Achsbolzens und entlang seiner Längsachse erfolgenden Verschiebung entweder - im Fall eines verschlissenen Schneidmessers - vom Messerträger entfernbar bzw. - im Fall eines neuen Schneidmessers - erneut am Messerträger befestigt worden ist, und dabei jeweils die Rastnocken in Verbindung mit dem Ansatz des Achsbolzens die Wirkverbindung mit dem Messerträger noch zu lösen bzw. soeben wieder hergestellt haben

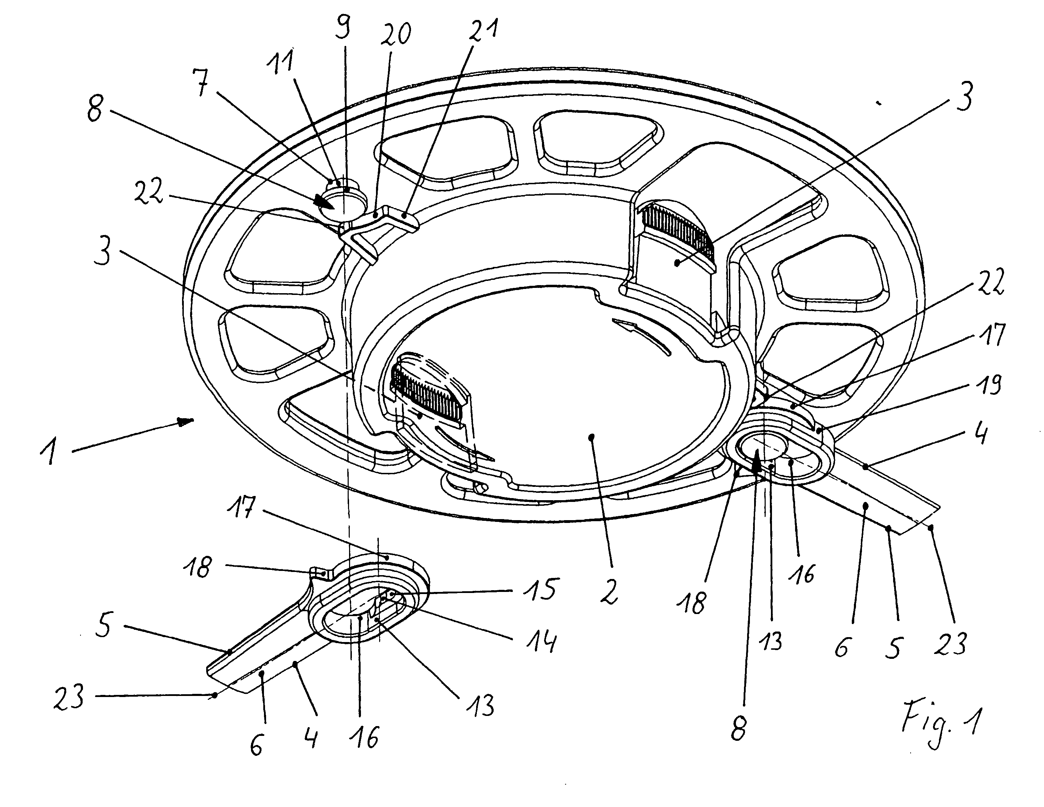

In der Fig. 1 ist ein scheibenförmig ausgebildeter Messerträger 1 für einen nicht in seiner Gesamtheit wiedergegebenen rotierenden Schneidkopf einer Pflanzenschneidvorrichtung dargestellt. Dieser Messerträger 1 wird beispielhaft mittels an seiner Nabe 2 befindlichen Haltezungen 3 am Ende einer ebenfalls nicht gezeigten und im Wesentlichen aus einer Führungsstange mit zwei Handgriffen sowie einem Motorgehäuse mit einer Schutzabdeckung bestehenden Pflanzenschneidvorrichtung befestigt und ist über einen Schalter von einem Antriebsmotor, vorzugsweise Elektromotor, in Rotation versetzbar. Dabei ist die Drehrichtung mittels Pfeilen auf der Nabe 2 dargestellt.

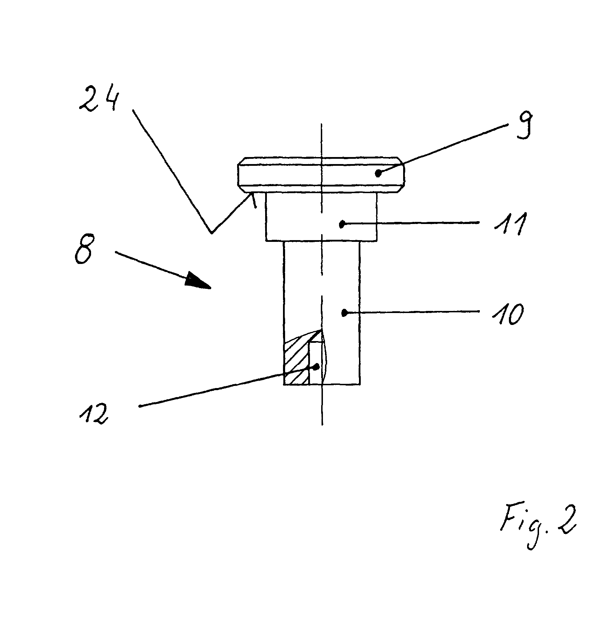

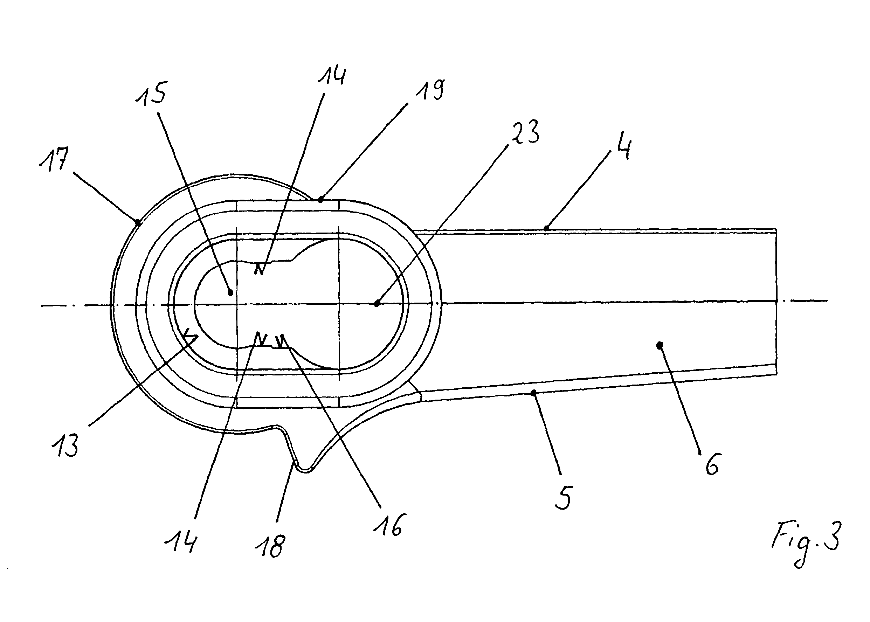

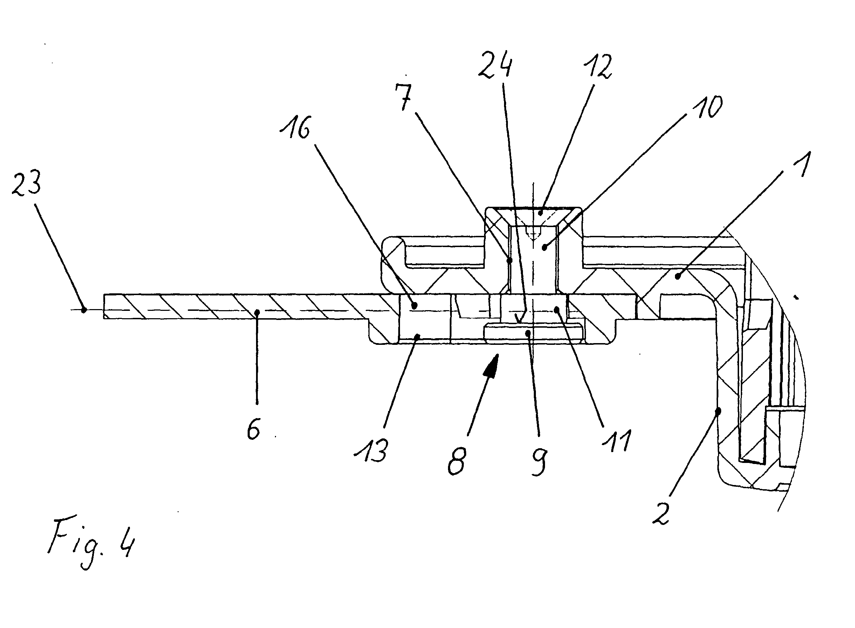

Für die schwenkbewegliche Lagerung des jeweiligen, eine Schneide 4 und einen Schneidenrücken 5 aufweisenden und aus Kunststoff bestehenden Schneidmessers 6 ist der Messerträger 1 in seinem Umfangsbereich auf zwei sich diametral gegenüberliegenden Seiten mit einer Bohrung 7 für die Aufnahme eines als Niet ausgestalteten Achsbolzens 8 ausgebildet, wobei der Achsbolzen 8 aus einem Kopf 9 und einem sich den Kopf 9 anschließenden und gegenüber dem Kopf 9 durchmessergeringeren bzw. gegenüber einem nachfolgenden Schaft 10 durchmessergrößeren Ansatz 11 besteht (siehe Fig. 2 und 4). Außerdem ist der Schaft 10 des Achsbolzens 8 an seinem freien Ende mit einer als Bohrung ausgebildeten Verstemmausnehmung 12 ausgeführt, mittels der die in diesem Schaftbereich durch Einsatz eines Niet- oder Stemmwerkzeuges erforderliche Verformung zur unlösbaren Befestigung des Achsbolzens 8 am Messerträger 1 erleichtert wird. Weiterhin ist das Schneidmesser 6 achsbolzenseitig mit einer den Kopf 9 des Achsbolzens 8 umgrenzenden langlochförmigen Kopfaussparung 13 und einem den Ansatz 11 des Achsbolzens 8 umschließenden engeren, mit Rastnocken 14 versehenen Langlochabschnitt 15 einer sich einseitig erweiternden langlochförmigen Ansatzaussparung 16 versehen. Außerdem sind am Außenumfang des achsbolzenseitigen Endes des Schneidmessers 6 eine kreissegmentförmige Verriegelungskurve 17 und eine Anschlagnase 18 sowie ein dieser Anschlagnase 18 gegenüberliegender Wechselanschlag 19 angeordnet (siehe auch Fig. 3), wobei die Verriegelungskurve 17 mit einer am Messerträger 1 befindlichen Verriegelungsfläche 20 und die Anschlagnase 18 sowie der Wechselanschlag 19 mit jeweils einer dem Messerträger 1 zugeordneten Anschlagfläche 21 bzw. 22 zusammenwirkend ausgestaltet sind. Vorteilhafterweise beinhalten die Verriegelungskurve 17 und Verriegelungsfläche 20 einen gleichen Krümmungsradius.

Nachfolgen soll die Funktionsweise bei einem sich erforderlich machenden Wechsel der Schneidmesser 6 beschrieben werden:

Dazu wird das verschlissene und somit auszutauschende Schneidmesser 6, sofern noch nicht geschehen, um den Achsbolzen 8 in eine Lage am Messerträger 1 geschwenkt, bei der der schneidenseitige Wechselanschlag 19 des Schneidmessers 6 mit der Anschlagfläche 22 des Messerträgers 1 in Flächenkontakt gelangt, so dass das Schneidmesser 6 gegenüber seiner sich in der Betriebsstellung radial über den Messerträger 1 hinauserstreckenden Stellung, dargestellt am Beispiel des rechten Schneidmessers 6 in den Figuren 1, 4 und 5 , eine um ca. 90° verschwenkte, tangentiale Lage (dargestellt am Beispiel des linken Schneidmessers 6 in den Figuren 1 und 5), in den Umfangsbereich des Messerträgers 1 erfahren hat, bei der im Wesentlichen die Schneide 4 radial nach innen bzw. der Schneidenrücken 5 radial nach außen zeigt. Allein in dieser Stellung wird die Möglichkeit für eine in Richtung des Achsbolzens 8 gerichtete und entlang des Längsachse 23 des Schneidmessers 6 erfolgende Verschiebung eingeräumt, bei der mit Bezugnahme auf das Schneidmesser 6, dessen engerer Langlochabschnitt 15 der Ansatzaussparung 16 durch Überwindung der diesen Langlochabschnitt 15 nochmals geringfügig verengenden Rastnocken 14 außer Halteeingriff mit dem Ansatz 11 des Achsbolzens 8 gerät und letztlich im sich erweiternden, in diesem Bereich der Abmessung der Kopfaussparung 13 angepassten Langlochabschnitt der Ansatzaussparung 16 zu liegen kommt. Nach dem Lösen dieser Arretierung kann nunmehr das Schneidmesser 6 vom vernieteten Achsbolzen 8 deshalb ungehindert axial abgenommen werden, weil in diesem Bereich der erweiterte Langlochabschnitt der Ansatzaussparung 16 und der Langlochabschnitt der Kopfaussparung 13 deckungsgleich mit dem Kopf 9 des Achsbolzens 8 zu liegen kommen und mit Bezug auf die Abmessung des Kopfes 9 des Achsbolzens 8 eine geringfügig größere Ausgestaltung erfahren haben.
In der Folge wird das neue Schneidmesser 6 in der oben beschriebenen tangentialen Stellung, jedoch mit seinem zwischen Ansatzaussparung 16 und Kopfaussparung 13 deckungsgleichen Bereich, über den Kopf 9 des Achsbolzens 8 bis zur Anlage mit dem Messerträger 1 bewegt, wonach eine in Richtung des Achsbolzens 8 gerichtete und entlang des Längsachse 23 des Schneidmessers 6 erfolgende Verschiebung vorgenommen wird. Dabei werden die Rastnocken 14 unter spürbaren Gegendruck über den Ansatz 11 des Achsbolzens 8 geführt, so dass dieser Ansatz 11 nunmehr das Schneidmesser 6 grundsätzlich in seiner Lage am Messerträger 1 sichert und dabei auch die ansatzseitige Stirnfläche 24 des Kopfes 9 den engeren Langlochabschnitt 15 der Ansatzaussparung 16 fixierend übergreift. In dieser Stellung ist der Kopf 9 des Achsbolzens 8 selbst in der Kopfaussparung 13 eingeordnet.
Nunmehr bewirkt jede noch so kleine Schwenkung des Schneidmessers 6 um den Achsbolzen 8 in Richtung der Betriebsstellung (Schneidstellung) bzw. auch über diese hinaus, gegebenenfalls bis zum Kontakt der Anschlagnase 18 mit der Anschlagfläche 21, dass eine in Richtung der Längsachse 23 der Schneidmessers 6 erfolgende und damit auch bezüglich des Achsbolzens 8 denkbare Verschiebung des Schneidmessers 6 ausgeschlossen werden kann. Einer derartigen Verschiebung steht einerseits die am Messerträger 1 befindliche Verriegelungsfläche 20, an die die kreissegmentförmige Verriegelungskurve 17 des Schneidmessers 6 anschlägt und andererseits die am Messerträger 1 vorgesehenen Anschlagfläche 21, mit welcher die Anschlagnase 18 des Schneidmessers 6 in Kontakt gerät, deshalb entgegen, weil dadurch die Rastnocken 14 in der Ansatzaussparung 16 nicht über den Ansatz 11 des Achsbolzens 8 bewegt werden können. Diese beschriebene Befestigungsart der Schneidmesser 6 am Messerträger 1 bedingt, dass ein unbeabsichtigtes Lösen der Schneidmesser 6 beim Rotieren des Schneidkopfes und damit in deren Betriebsstellung selbsttätig ausgeschlossen werden kann.

### Bezugszeichenliste

- 1: Messerträger
- 2: Nabe
- 3: Haltezunge
- 4: Schneide
- 5: Schneidenrücken
- 6: Schneidmesser
- 7: Bohrung
- 8: Achsbolzen
- 9: Kopf
- 10: Schaft
- 11: Ansatz
- 12: Verstemmausnehmung
- 13: Kopfaussparung
- 14: Rastnocken
- 15: (engerer) Langlochabschnitt
- 16: Ansatzaussparung
- 17: Verriegelungskurve
- 18: Anschlagnase
- 19: Wechselanschlag
- 20: Verriegelungsfläche
- 21: Anschlagfläche
- 22: Anschlagfläche
- 23: Längsachse
- 24: (ansatzseitige) Stirnfläche

## Patentansprüche

1. Messerträger für einen rotierenden Schneidkopf einer Pflanzenschneidvorrichtung, an dem mindestens zwei auf einem Achsbolzen schwenkbar gelagerte und in der Betriebsstellung den Messerträger radial überragende Schneidmesser aus Kunststoff angeordnet sind, wobei der Achsbolzen einen Kopf und einen Schaft beinhaltet sowie der Schaft eine Ausnehmung im Messerträgers durchgreifend ausgestaltet ist,
**dadurch gekennzeichnet,**
**dass** der Achsbolzen (8) als Niet ausgebildet ist und im Anschluß an den Kopf (9) einen gegenüber dem Kopf (9) durchmessergeringeren bzw. gegenüber dem Schaft (10) durchmessergrößeren Ansatz (11) aufweist und dabei der Kopf (9) des Achsbolzens (8) in einer langlochförmigen Kopfaussparung (13) und der Ansatz (11) des Achsbolzens (8) in einem engeren, mit Rastnocken (14) versehenen Langlochabschnitt (15) einer sich weiterhin einseitig erweiternden langlochförmigen Ansatzaussparung (16) am achsbolzenseitigen Ende des Schneidmessers (6) vorgesehen sind, dass das achsbolzenseitigen Ende an seinem Außenumfang eine Verriegelungskurve (17) und eine Anschlagnase (18) sowie einen dieser Anschlagnase (18) gegenüberliegenden Wechselanschlag (19) aufweist, wobei die Verriegelungskurve (17) mit einer am Messerträger (1) befindlichen Verriegelungsfläche (20 ) und die Anschlagnase (18 ) sowie der Wechselanschlag (19) mit jeweils einer dem Messerträger (1) zugeordneten Anschlagfläche (21 bzw. 22) zusammenwirkend ausgestaltet sind.

2. Messerträger für einen rotierenden Schneidkopf einer Pflanzenschneidvorrichtung nach Patentanspruch 1,
**dadurch gekennzeichnet,**
**dass** die Verriegelungskurve (17) und die Verriegelungsfläche (20) kreissegmentförmig ausgebildet sind.

3. Messerträger für einen rotierenden Schneidkopf einer Pflanzenschneidvorrichtung nach den Patentansprüchen 1 und 2,
**dadurch gekennzeichnet,**
**dass** die Verriegelungskurve (17) und die Verriegelungsfläche (20) einen gleichen Krümmungsradius aufweisen.

4. Messerträger für einen rotierenden Schneidkopf einer Pflanzenschneidvorrichtung nach Patentanspruch 1,
**dadurch gekennzeichnet,**
**dass** der Schaft (10) des Achsbolzens (8) an seinem freien Ende eine Verstemmausnehmung (12) aufweist.

5. Messerträger für einen rotierenden Schneidkopf einer Pflanzenschneidvorrichtung nach dem Patentanspruch 4,
**dadurch gekennzeichnet,**
**dass** die Verstemmausnehmung (12) als Bohrung ausgebildet ist

6. Messerträger für einen rotierenden Schneidkopf einer Pflanzenschneidvorrichtung nach Patentanspruch 1
**dadurch gekennzeichnet,**
**dass** die sich gegenüberliegende Anschlagnase (18) und der Wechselanschlag (19) diametral gegenüberliegend angeordnet sind.

## Claims

1. A blade support member for a rotating cutting head of a plant cutting apparatus comprising at least two cutting blades made of a synthetic material that are pivoted on an axle pin and protrude in operating position the blade support member in radial direction, whereas said axle pin includes a head and a shaft and said shaft runs through a recess in the blade support member,
**characterized in that**
the axle pin (8) is designed as a rivet and comprises a stud (11) with a smaller diameter than the head (9) or a greater diameter than the shaft (10) following the head (9), and the head (9) of said axle pin (8) is provided in an oblong head recess (13) and the stud (11) of the axle pin (8) is provided in a narrower oblong hole section (15) comprising locking tappets (14) of a unilaterally expanding stud recess (16) on the axle pin end of the cutting blade (6), said axle pin end comprising a locking cam (17) and a stop boss (18) on its perimeter as well as an alternate stop (19) opposite said stop boss (18) wherein said locking cam (17) is designed to interact with an interlocking surface (20) on the blade support member (1) and said stop boss (18) and the alternate stop (19) are designed to interact with one of stop surfaces (21 or 22, respectively) located on the blade support member (1).

2. The blade support member for a rotating cutting head of a plant cutting apparatus according to claim 1,
**characterized in that**
that the locking cam (17) and the interlocking surface (20) have the shape of a segment of a circle.

3. The blade support member for a rotating cutting head of a plant cutting apparatus according to claims 1 and 2,
**characterized in that**
the locking cam (17) and the interlocking surface (20) have the same radius of curvature.

4. The blade support member for a rotating cutting head of a plant cutting apparatus according to claim 1,
**characterized in that**
the shaft (10) of the axle pin (8) comprises a recess for a calk (12) on its free end.

5. The blade support member for a rotating cutting head of a plant cutting apparatus according to claim 4,
**characterized in that** said recess for a calk (12) is a hole.

6. The blade support member for a rotating cutting head of a plant cutting apparatus according to claim 1,
**characterized in that**
the opposing stop boss (18) and alternate stop (19) are diametrically opposite.

## Revendications

1. Support de lame pour une tête de coupe rotative d'un appareil de coupe de plantes qui est muni au moins de deux lames de coupe en matière plastique qui, elles, tournent sur palier autour d'un boulon- pivot et qui, en position de marche, débordent du support de lame en sens radial, où ce boulon- pivot est composé d'une tête et d'une tige et que la tige est située dans un creux du support de lame,
**caractérisé par le fait**
**que** le boulon- pivot (8) est conçu sous forme de rivet qui, au niveau de la tête (9), est doté d'un talon (11) dont le diamètre est inférieur à celui de la tête (9), mais supérieur à celui de la tige (10), que la tête (9) du boulon- pivot (8) est disposée dans un évidement sous forme de trou oblong (13) et que le talon (11) du boulon- pivot (8) est situé dans un segment de trou oblong (15) plus étroit qui est muni de mentonnets (14), ce segment faisant partie d'un évidement de talon (16) qui, au côté du boulon- pivot, s'étend unilatéralement au niveau de l'extrémité de la lame de coupe (6) et où, au niveau de son périmètre, cette extrémité du support de lame présente une courbe de verrouillage (17) et une came de butée (18) ainsi qu'un butoir alternatif situé en face de la came de butée (18), qu'à la courbe de verrouillage (17) se voit attribuée une superficie de verrouillage (20) située sur le support de lame (1), et que tant le talon de butée (18) que le butoir alternatif (19) sont conçus sous forme concourante, chacun des deux étant pourvu d'une superficie de butée (21 et 22) adaptée au support de lame (1).

2. Support de lame pour une tête de coupe rotative d'un appareil de coupe de plantes selon la revendication 1,
**caractérisé par le fait**
**que** la courbe de verrouillage (17) et la superficie de verrouillage (20) sont conçues sous forme de segment de cercle.

3. Support de lame pour une tête de coupe rotative d'un appareil de coupe de plantes selon les revendications 1 et 2,
**caractérisé par le fait**
**que** la courbe de verrouillage (17) et la superficie de verrouillage (20) présentent le même rayon de courbure.

4. Support de lame pour une tête de coupe rotative d'un appareil de coupe de plantes selon la revendication 1,
**caractérisé par le fait**
**que** la tige (10) du boulon- pivot (8) est dotée, au niveau de son extrémité libre, d'un creux de mattage (12).

5. Support de lame pour une tête de coupe rotative d'un appareil de coupe de plantes selon la revendication 4,
**caractérisé par le fait que** le creux de mattage (12) est conçu sous
forme d'alésage.

6. Support de lame pour une tête de coupe rotative d'un appareil de coupe de plantes selon la revendication 1,
**caractérisé par le fait**
**que** la came de butée (18) et le butoir alternatif (19) sont diamétralement opposés.
